# EUROPEAN PATENT SPECIFICATION

(11) **EP 2 262 271 B1**
(45) Date of publication and mention of the grant of the patent: **05.09.2012**
(21) Application number: 10004984.0
(22) Date of filing: 11.05.2010
(51) Int. Cl.: H04N 13/04, G02B 27/26, G02B 7/00

(54) **Frame unit holding polarizer means for video display devices**
Rahmen von Polarizierungsfilter für Videoanzeigegeräte
Unité de cadre supportant un filtre polariseur pour dispositifs d'affichage vidéo

(30) Priority: 04.06.2009 JP 2009134787
(43) Date of publication of application: 15.12.2010
(73) Proprietor: Sony Corporation, Tokyo 108-0075 (JP)
(72) Inventor: Murata, Hideo, Tokyo (JP); Ogawa, Shigeyuki, Tokyo (JP)
(74) Representative: Müller - Hoffmann & Partner

(56) References cited:
- US-A- 4 697 890
- US-A- 5 689 371
- US-A1- 2004 012 851

## Description

### BACKGROUND OF THE INVENTION

### 1. Field of the Invention

The present disclosure relates to a frame unit for video display devices and to a video display device. More specifically, the present disclosure relates to a frame unit on which a polarizing plate for a video display device can be mounted if necessary and to a video display device.

### 2. Description of the Related Art

In recent years, large-sized video display devices employing light emitting diodes (LEDs), plasma display panels (PDP), fluorescent tubes, fluorescent lamps, etc. are in widespread use. In addition, there are devised techniques for emitting light from odd and even lines in vibration directions orthogonal to each other to enable stereoscopic video images to be visualized through polarizing glasses (see Japanese Unexamined Patent Application Publication No. 2003-029207).

Further information pertaining to the prior art can be found in US patent 5,689,371 that has been interpreted by the European Patent Office as disclosing a frame unit for a video display device, the frame unit comprising: a frame having a frame body and a plurality of mutually facing legs, the frame body being disposed around a light emitting unit, the legs extending from the frame body so as to be fitted along side surfaces of the light emitting unit; and a polarizer being provided so as to extend between the mutually facing legs of the frame. It has also been interpreted by the European Patent Office as disclosing the feature of a polarizer extending between the mutually facing legs of the frame so as to be supported by the mutually facing legs.

US patent 4,697,890 discloses a device, such as a flashlight, spotlight, or reading light, for emitting an incident beam of light wherein the intensity and color of an incident beam of light emitted from the device can be manually modulated or adjusted. The device utilizes a variable density filter system which is manually adjustable and which incorporates a pair of optical linear polarizing filters or lenses which are mounted so that the emitted beam of light must pass through the polarizing filters. The filter system is adapted to produce at one extreme a high transmittance value when the axes of the polarizing filters are parallel. At the opposite extreme a very high extinction density is achieved when the axes of the polarizing filters are oriented so as to be essentially normal or perpendicular with each other. Varying optical densities are produced at settings between these two extremes.

US 2004/012851 discloses a stereoscopic image display apparatus that includes an image display unit for displaying image information corresponding to parallax in a first division and a second division; a divided wave plate filter unit having a frame and disposed adjacent to the first division and the second division of the image display unit, for rotating polarized light of the image information from the first division to a direction different from polarized light of the image information from the second division; and position adjusting means for acting on the frame of the divided wave plate filter unit and thereby allowing adjustment of a relative position between the image display unit and the divided wave plate filter. It also discloses a display apparatus that includes a filter unit used in a state of being laid over an image display unit for displaying image information in a first division and a second division; and a filter frame portion disposed integrally around a periphery of the filter unit; wherein the filter unit has a first wave plate in a region corresponding to the first division of the image display unit for rotating polarization direction of the image information from the first division to a direction different from polarization direction of the image information from the second division; and the filter frame portion has an alignment mark formed therein by a second wave plate for rotating polarization direction.

### SUMMARY OF THE INVENTION

The present invention provides a video display device in accordance with independent claim 1. Preferred embodiments of the invention are reflected in the dependent claims.

The claimed invention can be better understood in view of the embodiments described and illustrated in the present disclosure, *viz*. in the present specification and drawings. In general, the present disclosure reflects preferred embodiments of the invention. The attentive reader will note, however, that some aspects of the disclosed embodiments extend beyond the scope of the claims. To the respect that the disclosed embodiments indeed extend beyond the scope of the claims, the disclosed embodiments are to be considered supplementary background information and do not constitute definitions of the invention *per se.*

To implement such a stereoscopic video display device, it is necessary to provide polarizing plates having different polarization directions on the front surfaces of the light emitting units of a unitized video display unit so that the polarization direction can be changed for each line. A plurality of linear polarizing plates or an integrated polarizing plate is bonded to the forefront surface of the video display device. Problems with these polarizing plates are that it takes a considerable time and effort to bond and that the surfaces of the polarizing plates bonded to the forefront surfaces of the video display device reflect the outside light and cause trouble viewing video images.

It is desirable to facilitate the mounting of polarizers on a video display unit and to improve display characteristics.

According to an embodiment in accordance with the present disclosure, a frame unit for a video display device includes a frame and a polarizer. The frame has a frame body and mutually facing legs. The frame body is disposed around light emitting units. The legs extend from the frame body so as to fit along side surfaces of the light emitting units. The polarizer extends between the mutually facing legs of the frame.

According to this embodiment, the polarizer is disposed between the legs of the frame, which are fitted around the light emitting units, so the polarizer can be mounted at the right position with respect to the light emitting units simply by fitting the frame around the light emitting units.

In this embodiment, the frame is made of a flexible material and detachably fitted around the light emitting units, so the frame combined with the polarizer can be mounted and demounted easily as desired.

At least the front surface of the frame body is colored so as to suppress the reflection of light. According to this embodiment, the polarizer is disposed on the back of the frame from which the legs extend. When the frame is fitted around the light emitting units, the polarizer is positioned between the light emitting units and the frame body and the front surface of the frame body surrounding the light emitting units faces the viewer viewing the light emitting side of the light emitting units. If the front surface of frame body is colored in a color that suppresses the reflection of light, the frame body can prevent the diffuse reflection of outside light and thus serve as black stripes.

According to another embodiment in accordance with the present disclosure, a video display device includes a video display unit, a frame, and a plurality of polarizers. The video display unit has a plurality of light emitting units arranged in rows and columns. The frame has a frame body and a plurality of mutually facing legs, the frame body being disposed around the light emitting units of the video display unit, the legs extending from the frame body and fitted into gaps between the light emitting units. The polarizers are disposed so as to extend between the mutually facing legs of the frame.

In this embodiment, since the polarizers are disposed between the mutually facing legs of the frame to be fitted around the light emitting units, the polarizers corresponding to the light emitting units can be mounted on the video display unit simply by fitting the frame around the light emitting units. Alternatively, polarizing plates may be built in advance into the surfaces of the LED chips or LED packages used as the light emitting units of the stereoscopic video image display unit.

According to the embodiments in accordance with the present disclosure, the polarizers can be mounted on the video display unit in an easy and precise manner as desired.

### BRIEF DESCRIPTION OF THE DRAWINGS

FIG. 1 is a perspective view illustrating the basic structure of a frame unit for video display devices according to an embodiment in accordance with the present disclosure;
FIG. 2 is an exploded perspective view of the frame unit for video display devices according to this embodiment;
FIG. 3A is a sectional view illustrating the mounted and unmounted states of the frame unit for video display devices according to this embodiment;
FIG. 3B is a sectional view illustrating the mounted and unmounted states of another frame unit for video display devices according to another embodiment;
FIGs. 4A and 4B are perspective views illustrating an exemplary linear frame unit for video display devices;
FIG. 5 is a perspective view illustrating a matrix (rows and columns)-type frame unit for video display devices;
FIG. 6 is an exploded perspective view of a matrix (rows and columns)-type frame unit for video display devices;
FIGs. 7A and 7B are perspective views illustrating a video display device according to an embodiment in accordance with the present disclosure;
FIG. 8 illustrates a video display device according to this embodiment that is being used for viewing a stereoscopic video image; and
FIGs. 9A and 9B illustrate exemplary structures of light emitting units.

### DESCRIPTION OF THE PREFERRED EMBODIMENTS

A best mode (referred to below as an embodiment) for carrying out the teachings of the present disclosure will now be described in the following order: 1. Frame units for video display devices (exemplary basic structure of frame unit, exploded perspective view, mounted and unmounted states, exemplary linear structure, exemplary matrix structure)2. Video display device (exemplary structure of a frame unit, viewing of video images)3. Exemplary structures of light emitting units (rectangular package, round package)

### <1. Frame units for video display devices>

### [Basic structure of frame unit)

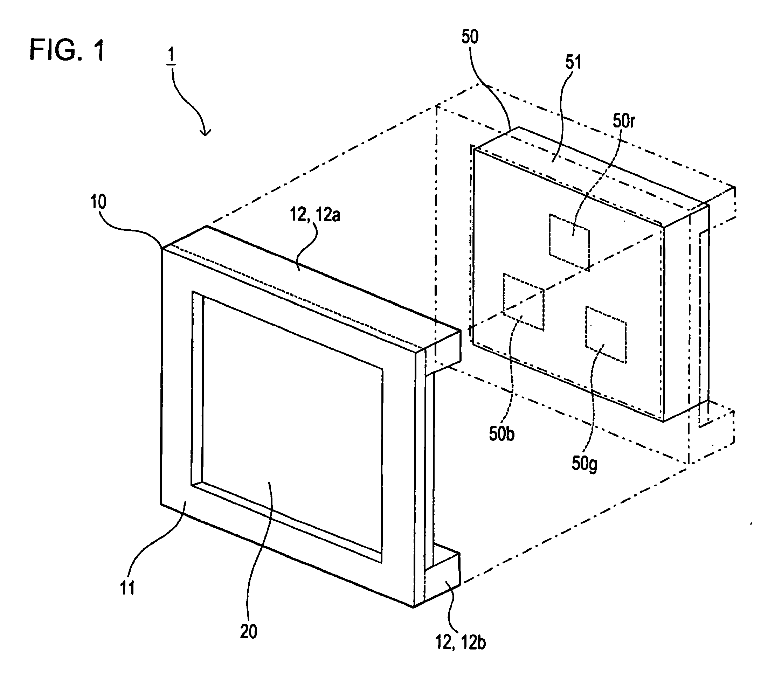

FIG. 1 is a perspective view illustrating the basic structure of a frame unit according to an embodiment in accordance with the present disclosure. The frame unit 1 with the basic structure accommodates a single light emitting unit 50. The frame unit 1 includes a frame 10 and a polarizer 20.

The frame 10 has a frame body 11 and mutually facing legs 12. The frame body 11 is a frame-shaped member corresponding to the outer shape of the light emitting unit 50, so that it can be disposed around the light emitting unit 50. The legs 12 are members extending from the frame body 11 and are fitted along side surfaces of the light emitting unit 50. In FIG. 1, the legs 12 protrude backward from the horizontal edges of the frame body 11.

Alternatively, the legs 12 may be disposed along the vertical edges of the frame body 11 in FIG. 1. Although the frame body 11 and the legs 12 are separated by dashed lines in FIG. 1 for convenience of description, the frame body 11 and the legs 12 may actually be molded as a single piece. The legs 12 may be provided partially along the horizontal edges of the frame body 11, instead of being provided entirely along the horizontal edges as shown in FIG. 1.

The polarizer 20 is a filter for controlling the polarization direction of the light emitted by the light emitting unit 50, for S-polarization (polarization direction perpendicular to the light incident surface), P-polarization (polarization direction parallel to the light incident surface), circular polarization (clockwise or counterclockwise), elliptical polarization, etc.

The polarizer 20 is disposed so as to extend between the mutually facing legs 12 of the frame 10. In FIG. 1, the polarizer 20 extends between the upper leg 12a and lower leg 12b provided on the mutually facing horizontal edges of the frame 10, so the polarizer 20 entirely covers the opening defined by the frame body 11 of the frame 10.

The frame unit 1 thus structured is detachably fitted around the light emitting unit 50. The light emitting unit 50 contains, for example, a light emitting element 50r emitting red light, a light emitting element 50g emitting green light, and a light emitting element 50b emitting blue light and is sealed in a package 51. The package 51 is rectangular in shape, for example, and the frame body 11 and legs 12 are sized to fit to the outer dimensions of the package 51.

Once the frame unit 1 is fitted around the light emitting unit 50, the package 51 of the light emitting unit 50 is fitted between the mutually facing legs 12, i.e., the upper and lower legs 12a, 12b in FIG. 1. Since the inner dimension between the upper and lower legs 12a, 12b is substantially the same as the height of the package 51 of the light emitting unit 50, the frame unit 1 can be fitted with no misalignment.

The frame 10 may be made of a flexible material such as a rubber-based (silicone rubber, etc.) material, for example, to facilitate the mounting and demounting of the frame unit 1 from the light emitting unit 50.

If the frame 10 is made of a flexible material, the inner dimension between the upper and lower legs 12a, 12b may be slightly smaller than the height of the package 51 of the light emitting unit 50, so that the frame 10 can be securely fixed to the package 51 by the force of reaction of the warped legs 12a, 12b once the frame 10 is fitted around the package 51.

At least the front surface of the frame body 11 of the frame 10 is colored in black, dark gray, or another color that suppresses the reflection of light, so that the frame body 11 can prevent the diffuse reflection of outside light (other than the light from the light emitting unit 50) and thus serve as the black stripes of the video display device. Alternatively, the front surface of the frame body 11 may suppress the reflection of light by the color of the material itself or by the surface treatment (surface asperities, for example). Although not shown, an overhang (canopy) may be provided on the upper front of the frame body 11 as a sunshade in case the video display device is installed outdoors.

### [Exploded perspective view]

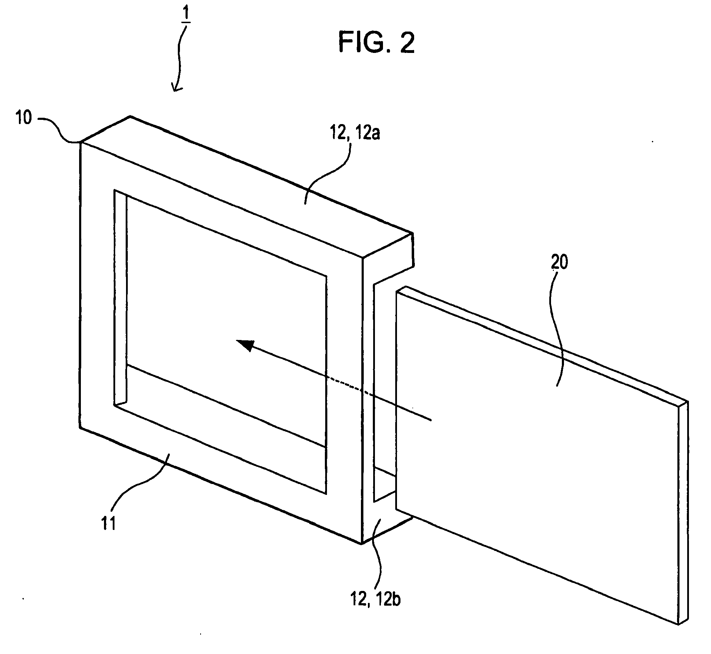

FIG. 2 is an exploded perspective view of the frame unit according to this embodiment. The frame unit 1 includes a frame 10 and a polarizer 20 which is fitted between the mutually facing legs 12 of the frame 10. The polarizer 20 may be fitted between the upper and lower legs 12a, 12b or bonded to the back of the frame body 11. If the polarizer 20 is fitted between the upper and lower legs 12a, 12b, the polarizer 20 can be inserted or extracted as desired.

In this embodiment, the polarizer 20 is disposed on the back of the frame body 11 or at a position in the frame body 11, so that, once the frame 10 is mounted on the light emitting unit, the front surface of the frame body 11 surrounding the light emitting unit on the forefront of the video display unit faces the viewer and serves as the black stripes of the video display device. Since the polarizer 20 is surrounded by the frame body 11, the polarizer 20 is improved in directivity and protected from deformation and scratches. Furthermore, the polarizer 20 can be protected from deterioration, because the frame body 11 reduces the direct incidence of outside light.

### [Mounted and unmounted states]

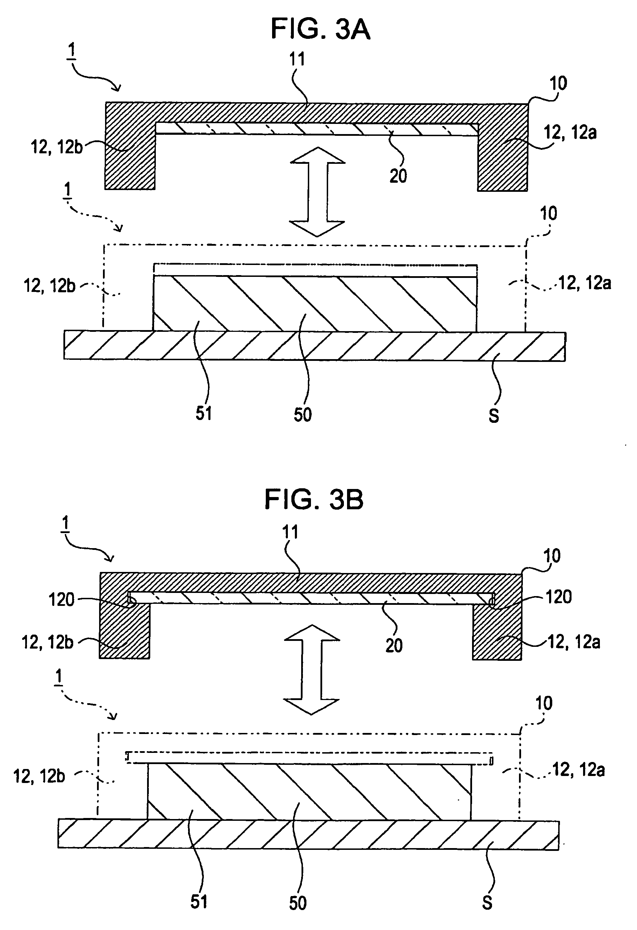

FIGS. 3A and 3B are sectional views illustrating the mounted and unmounted states of the frame unit according to this embodiment. As shown in FIG. 3A, the frame unit 1 has the polarizer 20 fitted between the legs 12 of the frame 10. The light emitting unit 50 is mounted on a substrate S and has electrodes (not shown) electrically connected, by soldering for example, to the wiring pattern on the substrate S. The frame unit 1 is fitted over the package 51 of the light emitting unit 50.

Since the inner dimension between the legs 12 (12a, 12b) is substantially the same as the height of the package 51 of the light emitting unit 50, the package 51 of the light emitting unit 50 is precisely fitted between the legs 12 (12a, 12b) once the frame unit 1 is fitted over the light emitting unit 50. Since the polarizer 20 is disposed between the legs 12 (12a, 12b) on the back of the frame body 11, the polarizer 20 faces the light emitting surface of the light emitting unit 50 once the frame unit 1 is fitted over the light emitting unit 50.

FIG. 3B is a sectional view showing recesses provided in the legs. In this embodiment, recesses 120 are provided in the legs 12 (12a, 12b) in the frame 10 of the frame unit 1 and a polarizer 20 is inserted into the recesses 120. The recesses 120 have mutually facing openings in the portions of the legs 12 (12a, 12b) adjacent to the frame body 11, so that the polarizer 20 wider than the inner dimension between the legs 12 (12a, 12b) can be inserted in the recesses 120. These recesses 120 receive the polarizer 20 when it is fitted between the legs 12 (12a, 12b).

In FIGs. 3A and 3B, if the legs 12 have a length equivalent to the thickness of the light emitting unit 50 plus the thickness of the polarizer 20, the polarizer 20 is brought into close contact with the light emitting unit 50 and the bottoms of the legs 12 abut the substrate S once the frame unit 1 is fitted over the light emitting unit 50. In this arrangement, if adhesive is applied to the bottoms of the legs 12, the frame 10 is securely fixed. If the frame 10 is flexible, the bottoms of the legs 12 fixed by adhesive to the substrate S can be detached from the substrate S simply by warping the frame 10 starting with one end thereof.

Alternatively, surface asperities may be provided on the inner wall surfaces of the legs 12 (12a, 12b), which are brought into contact with the side surfaces of the package 51 of the light emitting unit 50 once the frame unit 1 is fitted over the light emitting unit 50. These surface asperities increase the force of friction between the inner wall surfaces of the legs 12 (12a, 12b) and the side surfaces of the package 51 of the light emitting unit 50 and thereby enhance the holding power of the legs 12 (12a, 12b) once the frame unit 1 is fitted over the light emitting unit 50.

### [Linear structure]

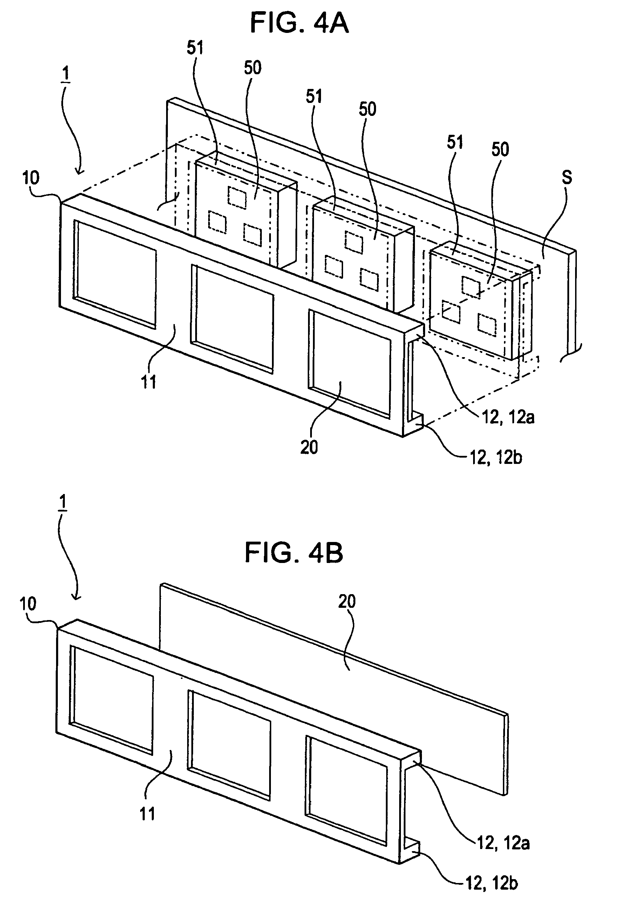

FIG. 4A is a perspective view illustrating the overall structure of a linear frame unit; FIG. 4B is an exploded view of this frame unit. The frame unit 1 is suitable for a plurality of light emitting units 50 arranged in a row or column. The light emitting units 50 are arranged at predetermined intervals on the substrate S. In FIG. 4A, the light emitting units 50 are arranged in a row.

The frame 10 of the frame unit 1 is disposed along this row of light emitting units 50. The frame body 11 of the frame 10 is molded into a shape of a frame including portions running between and around the light emitting units 50. The legs 12 are mutually facing members extending from the frame body 11 so as to be fitted along side surfaces of the light emitting units 50. In FIGs. 4A and 4B, the legs 12 extend backward from the horizontal edges of the frame body 11.

Alternatively, the legs 12 may be disposed along the vertical edges of the frame body 11 in FIGs. 4A and 4B. Although the frame body 11 and the legs 12 are separated by dashed lines in FIGs. 4A and 4B for convenience of description, the frame body 11 and the legs 12 may actually be molded as a single piece. The legs 12 may be provided partially along the horizontal edges of the frame body 11, instead of being provided entirely along the horizontal edges as shown in FIGs. 4A and 4B.

The polarizer 20 is a filter for controlling the polarization direction of the light emitted by the light emitting units 50, for S-polarization (polarization direction perpendicular to the light incident surface), P-polarization (polarization direction parallel to the light incident surface), circular polarization (clockwise or counterclockwise), elliptical polarization, etc.

The polarizer 20 is disposed so as to extend between the mutually facing legs 12 of the frame 10. In FIG. 4A, the polarizer 20 extends between the upper leg 12a and lower leg 12b provided on the mutually facing horizontal edges of the frame 10, so the polarizer 20 entirely covers the openings defined by the frame body 11 of the frame 10.

The frame unit 1 thus structured is detachably fitted around the plurality of light emitting units 50. When the frame unit 1 is fitted over the light emitting units 50, the packages 51 of the light emitting units 50 are fitted between the mutually facing legs 12, i.e., the upper and lower legs 12a, 12b in FIG. 4A. Since the inner dimension between the upper and lower legs 12a, 12b is substantially the same as the height of the package 51 of the light emitting unit 50, the frame unit 1 can be fitted with no misalignment.

The frame 10 may be made of a flexible material such as a rubber-based (silicone rubber, etc.) material, for example, to facilitate the mounting and demounting of the frame unit 1 from the light emitting unit 50.

If the frame 10 is made of a flexible material, the inner dimension between the upper and lower legs 12a, 12b may be slightly smaller than the height of the package 51 of the light emitting unit 50, so that the frame 10 can be securely fixed to the packages 51 by the force of reaction of the warped legs 12a, 12b once the frame 10 is fitted around the packages 51.

At least the front surface of the frame body 11 of the frame 10 is colored in black, dark gray, or another color that suppresses the reflection of light, so that the frame body 11 can prevent the diffuse reflection of outside light (other than the light from the light emitting unit 50) and thus serve as the black stripes of the video display device.

As shown in FIG. 4B, the frame unit 1 includes a frame 10 and a polarizer 20 which is fitted between the mutually facing legs 12 of the frame 10. The polarizer 20 may be fitted between the upper and lower legs 12a, 12b or bonded to the back of the frame body 11. If the polarizer 20 is fitted between the upper and lower legs 12a, 12b, the polarizer 20 can be inserted or extracted as desired.

If the frame unit 1 is fitted over a plurality of light emitting units 50 arranged in a row, a long polarizer 20 extending along this row is inserted between the upper and lower legs 12a, 12b as shown in FIG. 4B. If recesses 120 are provided in the upper and lower legs 12a, 12b as shown in FIG. 3B, the long polarizer 20 can be inserted easily and reliably, guided by the recesses 120.

### [Matrix structure]

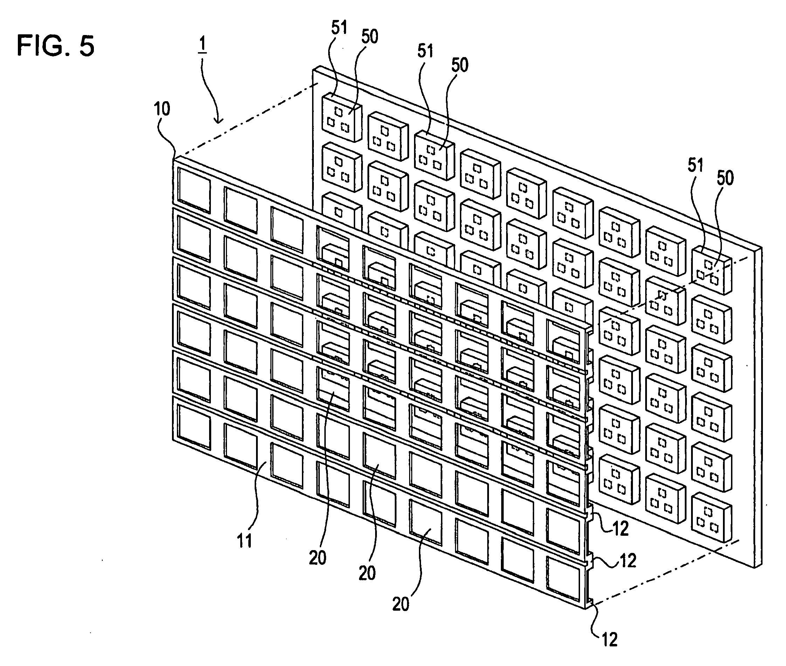

FIG. 5 is a perspective view illustrating a frame unit implemented as a matrix (rows and columns). This frame unit 1 is suitable for a plurality of light emitting units 50 arranged in a matrix. The light emitting units 50 are arranged in rows and columns at predetermined intervals on the substrate S.

The frame 10 of the frame unit 1 is disposed along the rows and columns of light emitting units 50. The frame body 11 of the frame 10 is molded into a shape of a frame including portions running between and around the light emitting units 50. Legs 12 are mutually facing members extending from the frame body 11 so as to be fitted along side surfaces of the light emitting units 50. In FIG. 5, the legs 12 extend backward from the horizontal edges of the frame body 11.

Alternatively, the legs 12 may be disposed along the vertical edges of the frame body 11 in FIG. 5. Although the frame body 11 and the legs 12 are described as discrete parts for convenience of description, the frame body 11 and the legs 12 may actually be molded as a single piece. The legs 12 may be provided partially along the horizontal edges of the frame body 11, instead of being provided entirely along the horizontal edges as shown in FIG. 5.

The polarizer 20 is a filter for controlling the polarization direction of the light emitted by the light emitting units 50, for S-polarization (polarization direction perpendicular to the light incident surface), P-polarization (polarization direction parallel to the light incident surface), circular polarization (clockwise or counterclockwise), elliptical polarization, etc.

The polarizers 20 are disposed so as to extend between the mutually facing legs 12 of the frame 10. In FIG. 5, the polarizers 20 extend between the upper and lower legs 12 provided on the mutually facing horizontal edges of the frame 10, so the polarizers 20 entirely covers the openings defined by the frame body 11 of the frame 10.

The frame unit 1 thus structured is detachably fitted around the plurality of light emitting units 50. When the frame unit 1 is fitted over the light emitting units 50, the packages 51 of the light emitting units 50 are fitted between the mutually facing legs 12. Since the inner dimension between the mutually facing upper and lower legs 12 is substantially the same as the height of the package 51 of the light emitting unit 50, the frame unit 1 can be fitted with no misalignment.

The frame 10 may be made of a flexible material such as a rubber-based (silicone rubber, etc.) material, for example, to facilitate the mounting and demounting of the frame unit 1 from the light emitting unit 50.

If the frame 10 is made of a flexible material, the inner dimension between the upper and lower legs 12a, 12b may be slightly smaller than the height of the package 51 of the light emitting unit 50, so that the frame 10 can be securely fixed to the packages 51 by the force of reaction of the warped legs 12a, 12b once the frame 10 is fitted around the packages 51.

At least the front surface of the frame body 11 of the frame 10 is colored in black, dark gray, or another color that suppresses the reflection of light, so that the frame body 11 can prevent the diffuse reflection of outside light (other than the light from the light emitting unit 50) and thereby serve as the black stripes of the video display device.

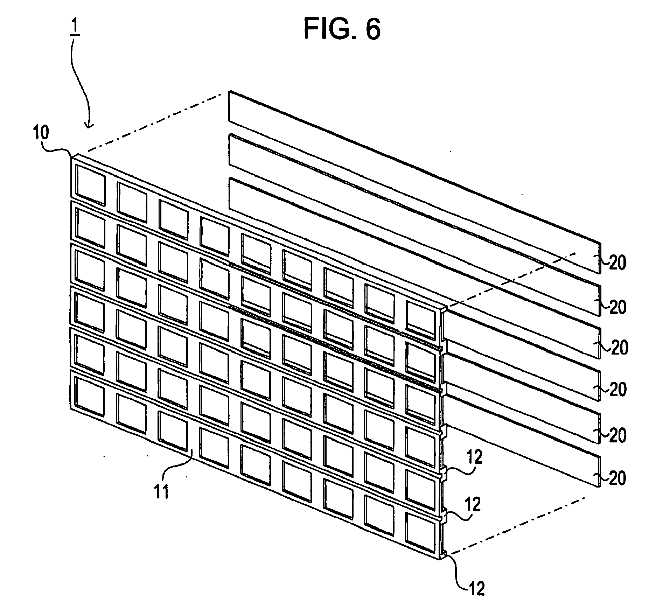

FIG. 6 is an exploded perspective view of the frame unit. As shown in FIG. 6, the frame unit 1 includes a frame 10 and polarizers 20 which are fitted between the mutually facing legs 12 of the frame 10. The polarizers 20 may be fitted between the mutually facing upper and lower legs 12 or bonded to the back of the frame body 11. If the polarizers 20 are fitted between the mutually facing upper and lower legs 12, the polarizers 20 can be inserted or extracted as desired.

If the frame unit 1 is fitted over a plurality of light emitting units 50 arranged in a matrix, long polarizers 20 extending along the rows of light emitting units 50 are inserted between the mutually facing upper and lower legs 12 as shown in FIG. 6. If recesses 120 are provided in the upper and lower legs 12 as shown in FIG. 3B, the long polarizers 20 can be inserted easily and reliably, guided by the recesses 120.

If the long polarizers 20 are mounted for individual rows, the polarization direction of the polarizers 20 can be set for each row. For example, the polarizers 20 may be mounted so that the polarization direction is changed alternately in every other row.

### <2. Video display device>

### [Frame structure]

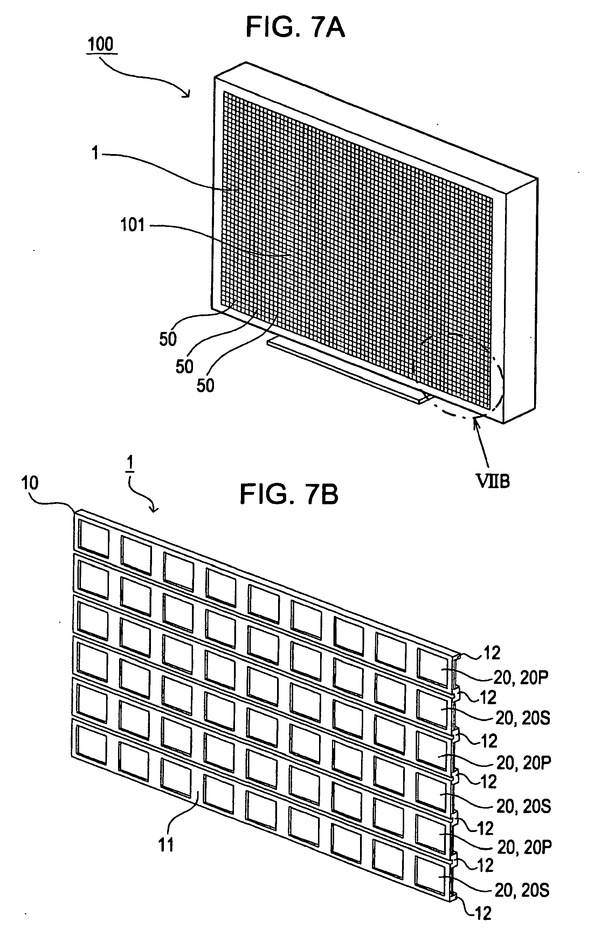

FIGs. 7A and 7B are perspective views illustrating a video display device according to another embodiment in accordance with the present disclosure. The video display device 100 has a video display unit 101 having a plurality of light emitting units 50 arranged in a matrix and the frame unit 1 according to the embodiment described earlier mounted thereon.

As shown in FIG. 7B, there is applied the frame unit 1 implemented as the matrix shown in FIGs. 5 and 6. The frame unit 1 is preferably implemented as a matrix for efficiency of mounting, although the frame unit 1 in the basic structure shown in FIG. 1 or in the linear structure shown in FIGs. 4A and 4B may be employed. If the matrix-type frame unit 1 is employed, the entire surface of the video display unit 101 may be covered with a single frame unit 1 or a plurality of frame units 1 that are sized to cover predetermined partitions of the entire surface of the video display unit 101.

The frame 10 of the frame unit 1 is disposed along the rows and columns of light emitting units 50. The frame body 11 of the frame 10 is molded into a shape of a frame including portions running between and around the light emitting units 50. The legs 12 are mutually facing members extending from the frame body 11 so as to be fitted along side surfaces of the light emitting units 50.

The polarizer 20 is a filter for controlling the polarization direction of the light emitted by the light emitting unit 50, for S-polarization (polarization direction perpendicular to the light incident surface), P-polarization (polarization direction parallel to the light incident surface). circular polarization (clockwise or counterclockwise), elliptical polarization, etc.

The frame unit 1 thus structured is detachably fitted around the plurality of light emitting units 50 forming part of the video display unit 101. When the frame unit 1 is fitted over the light emitting units 50, the packages 51 of the light emitting units 50 are fitted between the mutually facing legs 12. Since the inner dimension between the mutually facing upper and lower legs 12 is substantially the same as the height of the package 51 of the light emitting unit 50, the frame unit 1 can be fitted with no misalignment.

The frame 10 may be made of a flexible material, such as a rubber-based (silicone rubber, etc.) material, for example, to facilitate the mounting and demounting of the frame unit 1 from the video display unit 101.

At least the front surface of the frame body 11 of the frame 10 is colored in black, dark gray, or another color that suppresses the reflection of light, so that the frame body 11 can prevent the diffuse reflection of outside light (other than the light from the light emitting unit 50) and thus serve as the black stripes provided in the gaps between the light emitting units 50 of the video display unit 101.

In this embodiment, the frame unit 1 accommodates long polarizers 20 associated with the individual rows of the video display unit 101. The long polarizers 20 are inserted between the mutually facing upper and lower legs 12a, 12b. If recesses 120 are provided in the upper and lower legs 12 as shown in FIG. 3B, the long polarizers 20 can be inserted easily and reliably, guided by the recesses 120.

If the video display device 100 is used to visualize stereoscopic video images, the polarizers 20 are mounted so that the polarizing direction is changed alternately in every other row. For example, polarizers 20P for converting the light emitted from the light emitting units 50 into P-polarized light and polarizers 20S for converting the light emitted from the light emitting units 50 into S-polarized light are arranged alternately in every other row.

Alternatively, polarizers of other polarizing directions may be employed, instead of the polarizers 20P, 20S for P-polarization and S-polarization arranged alternately in every other row in this example.

### [Viewing of video images]

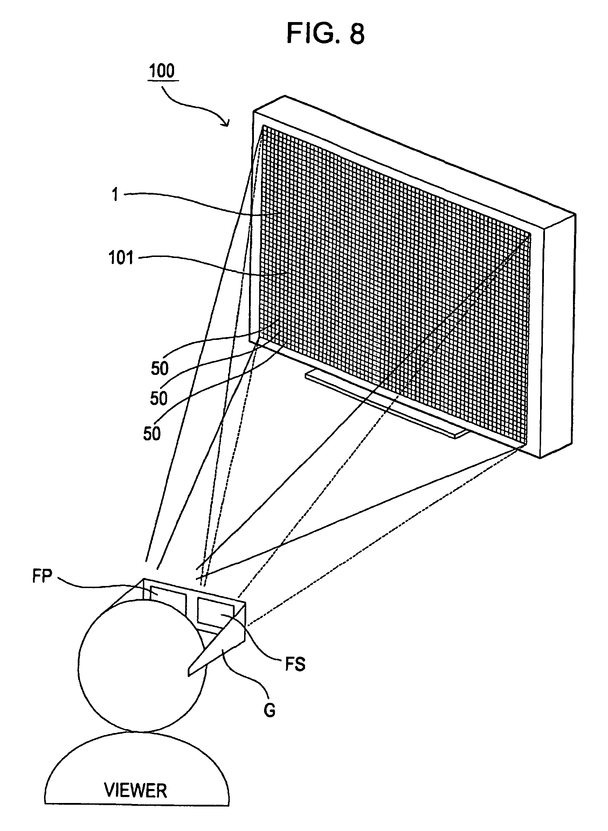

FIG. 8 illustrates a video display device according to this embodiment being used for viewing stereoscopic video images. A video display device 100 has a video display unit 101 having a plurality of light emitting units 50 arranged in a matrix and the frame unit 1 according to the embodiment described earlier mounted thereon. Although not shown, polarizers 20P for P-polarization and polarizers 20S for S-polarization are arranged alternately in every other row in the frame unit 1.

To visualize a stereoscopic video image, the video display device 100 changes the displayed video images alternately in odd and even rows.

In the frame unit 1 according to the embodiment described earlier, the polarizers in the odd rows convert the light emitted from the odd lines into S-polarized (or P-polarized) light and the polarizers in the even rows convert the light emitted from the even lines into P-polarized (or S-polarized) light.

The viewer views the video images with the right and left eyes through eyeglasses G that transmit the light polarized in different directions. For example, the eyeglasses G have a filter FP that transmits the P-polarized light toward the left eye and another filter FS that transmits the S-polarized light toward the right eye. In this manner, the right and left eyes of the viewer separately view the light polarized in different directions.

Suppose that the polarizers 20 in the frame unit 1 convert the image in the odd rows in the video display device 100 into P-polarized light and the image in the even rows into S-polarized light. It is assumed here that the eyeglasses G have a filter FP that transmits the P-polarized light toward the left eye and another filter FS that transmits the S-polarized light toward the right eye.

In this case, the image in the odd rows of the video display device 100 is converted into P-polarized light and reaches the left eye of the viewer wearing the eyeglasses G through the filter FP that transmits the P-polarized light. Since the filter FS for the right eye does not transmit the P-polarized light, the image in the odd rows does not reach the right eye of the viewer and is viewed only with the left eye.

On the other hand, the image in the even rows of the video display device 100 is converted into S-polarized light and reaches the right eye of the viewer wearing the eyeglasses G through the filter FS that transmits the S-polarized light. Since the filter FP for the left eye does not transmit the S-polarized light, the image in the even rows does not reach the left eye and is viewed only with the right eye.

In this manner, the viewer wearing the eyeglasses G views with the left eye the image displayed in the odd rows in the video display device 100 and with the right eye the image displayed in the even rows. The video display device 100 converts a video image into an image displayed in the odd rows and another image displayed in the even rows so that a stereoscopic video image can be visualized. The viewer recognizes the stereoscopic video image by viewing the converted images with the right and left eyes.

Since the frame unit 1 is detachably mounted on the video display device 100 according to this embodiment, the frame unit 1 can be mounted when the video display device 100 is used to visualize stereoscopic video images. When the video display device 100 is used to display normal video images (two-dimensional images), the frame unit 1 can be demounted.

### <3. Exemplary structures of light emitting units>

### [Rectangular package]

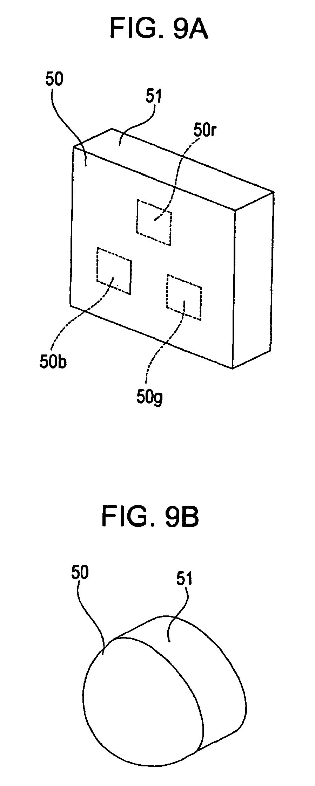

FIGs. 9A and 9B illustrate exemplary structures of light emitting units. FIG. 9A shows a light emitting unit included in a rectangular package. This light emitting unit 50 has light emitting elements sealed in a rectangular package 51. In the light emitting unit 50, a light emitting element 50r emitting red light, light emitting element 50g emitting green light, and light emitting element 50b emitting blue light are arranged in a predetermined order.

The light emitting elements, however, are not limited to the above three light emitting elements 50r, 50g, 50b; one or more light emitting elements emitting a single color may be sealed in a single package, or four or more light emitting elements may be arranged, or colors other than the above may be used.

### [Round package]

FIG. 9B shows a light emitting unit included in a round package. This light emitting unit 50 has light emitting elements sealed in a round package 51. As with the case of the rectangular package described above, a plurality of light emitting elements emitting different colors may be sealed, or one or more light emitting elements emitting a single color may be sealed.

If the frame unit 1 according to this embodiment is applied to the light emitting units 50 included in the round packages 51, the legs 12 may be arranged so as to fit around virtual quadrangles, each of which circumscribes the round package 51. Alternatively, the frame body 11 may have round openings shaped according to the shape of the round package 51.

Examples of the light emitting elements employed in the light emitting units 50 housed in the different packages described above may include semiconductor lasers and organic EL light emitting elements, in addition to the LEDs. Polarizing plates may be built into the surfaces of the light emitting elements in the light emitting unit 50 (for example, in the surfaces of LED chips) or in the packages as appropriate. If the light emitting unit 50 having polarizing plates built therein is employed, the frame 10 may not necessarily have the polarizer 20 mounted in advance.

According to this embodiment, a video display device that does not generate polarization fluctuations can be implemented simply by fitting the frame unit 1 to the light emitting unit 50. Since at least the front surface of the frame body is colored in a color that suppresses the reflection of light, the frame body serves as the black stripes provided in the gaps between the light emitting units 50. By synergistic effects of these features, stereoscopic video images can be visualized at a higher contrast and a brightness approximately 10-20% higher than a typical video display device in the past.

It should be understood by those skilled in the art that various modifications, combinations, sub-combinations and alterations may occur depending on design requirements and other factors insofar as they are within the scope of the appended claims.

## Claims

1. A video display device (100), comprising:
a video display unit (101) having a plurality of light emitting units (50) arranged at predetermined intervals;
a frame (10) having a frame body (11) and a plurality of mutually facing legs (12), the frame body (11) being disposed around the plurality of light emitting units (50), the legs (12) extending from the frame body and being fitted along side surfaces of the light emitting units (50); and
a plurality of polarizers (20) extending between the mutually facing legs (12) of the frame (10) so as to be supported by the mutually facing legs (12),
wherein the mutually facing legs (12) separate the polarizers (20) from each other.

2. The video display device (100) according to claim 1, wherein the frame (10) is detachably fitted around the plurality of light emitting units (50).

3. The video display device (100) according to any one of claims 1 or 2, wherein at least a front surface of the frame body (11) of the frame (10) is colored in a color that suppresses light reflection.

4. The video display device (100) according to any one of claims 1 to 3, wherein at least a front surface of the frame body (11) of the frame (10) is surface-treated so as to suppress light reflection.

5. The video display device (100) according to any one of claims 1 to 4, wherein the frame (10) is made of a flexible material.

6. The video display device (100) according to any one of claims 1 to 5, wherein the plurality of light emitting units (50) are arranged in rows and columns at predetermined intervals.

7. The video display device (100) according to claim 7, wherein the plurality of polarizers (20) includes two types of polarizers (20) different in polarization direction and disposed alternately in every other row of the light emitting units (50).

## Patentansprüche

1. Videoanzeigevorrichtung (100), die enthält:
eine Videoanzeigeeinheit (101), die mehrere lichtemittierende Einheiten (50) besitzt, die in vorgegebenen Intervallen angeordnet sind;
einen Rahmen (10), der einen Rahmenkörper (11) und mehrere sich gegenüberliegende Beine (12) besitzt, wobei der Rahmenkörper (11) um die mehreren lichtemittierenden Einheiten (50) angeordnet ist, wobei die Beine (12) sich von dem Rahmenkörper erstrecken und entlang Seitenflächen der lichtemittierenden Einheiten (50) eingepasst sind; und
mehrere Polarisatoren (20), die sich zwischen den sich gegenüberliegenden Beinen (12) des Rahmens (10) derart erstrecken, dass sie durch die sich gegenüberliegenden Beine (12) abgestützt werden,
wobei die sich gegenüberliegenden Beine (12) die Polarisatoren (20) voneinander trennen.

2. Videoanzeigevorrichtung (100) nach Anspruch 1, wobei der Rahmen (10) um die mehreren lichtemittierenden Einheiten (50) abnehmbar eingepasst ist.

3. Videoanzeigevorrichtung (100) nach einem der Ansprüche 1 oder 2, wobei mindestens eine vordere Fläche des Rahmenkörpers (11) des Rahmens (10) in einer Farbe gefärbt ist, die Lichtreflexion unterdrückt.

4. Videoanzeigevorrichtung (100) nach einem der Ansprüche 1 bis 3, wobei mindestens eine vordere Fläche des Rahmenkörpers (11) des Rahmens (10) oberflächenbehandelt ist, um Lichtreflexion zu unterdrücken.

5. Videoanzeigevorrichtung (100) nach einem der Ansprüche 1 bis 4, wobei der Rahmen aus einem flexiblen Material hergestellt ist.

6. Videoanzeigevorrichtung (100) nach einem der Ansprüche 1 bis 5, wobei die mehreren lichtemittierenden Einheiten (50) in Reihen und Spalten in vorgegebenen Intervallen angeordnet sind.

7. Videoanzeigevorrichtung (100) nach Anspruch 7, wobei die mehreren Polarisatoren (20) zwei Arten von Polarisatoren (20) enthalten, die sich in der Polarisierungsrichtung unterscheiden und abwechselnd in jeder zweiten Reihe der lichtemittierenden Einheiten (50) angeordnet sind.

## Revendications

1. Dispositif d'affichage vidéo (100), comprenant :
une unité d'affichage vidéo (101) comportant une pluralité d'unités d'émission de lumière (50) agencées à des intervalles prédéterminés ;
un cadre (10) comportant un corps de cadre (11) et une pluralité de pieds (12) se faisant face mutuellement, le corps de cadre (11) étant disposé autour de la pluralité d'unités d'émission de lumière (50), les pieds (12) s'étendant du corps de cadre et étant montés le long des surfaces latérales des unités d'émission de lumière (50) ; et
une pluralité de polariseurs (20) s'étendant entre les pieds (12) se faisant face mutuellement du cadre (10) de manière à être supportés par les pieds (12) se faisant face mutuellement,
dans lequel les pieds (12) se faisant face mutuellement séparent les polariseurs (20) les uns des autres.

2. Dispositif d'affichage vidéo (100) selon la revendication 1, dans lequel le cadre (10) est monté de manière détachable autour de la pluralité d'unités d'émission de lumière (50).

3. Dispositif d'affichage vidéo (100) selon l'une quelconque des revendications 1 et 2, dans lequel au moins une surface avant du corps de cadre (11) du cadre (10) est colorée en une couleur qui supprime la réflexion de lumière.

4. Dispositif d'affichage vidéo (100) selon l'une quelconque des revendications 1 à 3, dans lequel au moins une surface avant du corps de cadre (11) du cadre (10) a reçu un traitement de surface de manière à supprimer la réflexion de lumière.

5. Dispositif d'affichage vidéo (100) selon l'une quelconque des revendications 1 à 4, dans lequel le cadre (10) est constitué d'un matériau flexible.

6. Dispositif d'affichage vidéo (100) selon l'une quelconque des revendications 1 à 5, dans lequel la pluralité d'unités d'émission de lumière (50) sont agencées en rangées et en colonnes à des intervalles prédéterminés.

7. Dispositif d'affichage vidéo (100) selon la revendication 7, dans lequel la pluralité de polariseurs (20) comprend deux types de polariseurs (20) avec des directions de polarisation différentes et disposés alternativement dans une colonne sur deux des unités d'émission de lumière (50).
